# NEUE EUROPÄISCHE PATENTSCHRIFT

(11) **EP 0 832 909 B2**
(45) Veröffentlichungstag und Bekanntmachung des Hinweises auf die Entscheidung über den Einspruch: **08.04.2015**
(45) Hinweis auf die Patenterteilung: 28.04.2004
(21) Anmeldenummer: 97116522.0
(22) Anmeldetag: 23.09.1997
(51) Int. Cl.: C08G 18/48, C08G 18/50, C08G 101/00

(54) **Verfahren zur Herstellung von Polyurethan-Hartschaumstoffen**
Process for the preparation of rigid polyurethane foams
Procédé de préparation de mousses de rigides de polyuréthane

(30) Priorität: 24.09.1996 DE 19639121
(43) Veröffentlichungstag der Anmeldung: 01.04.1998
(73) Patentinhaber: BASF SE, 67056 Ludwigshafen (DE)
(72) Erfinder: Rotermund, Udo, Dr., 01990 Ortrand (DE); Hempel, Renate, 01945 Ruhland (DE); Seifert, Holger, Dr., 49448 Hüde (DE); Wiegmann, Werner, 32369 Rahdem (DE)

(56) Entgegenhaltungen:
- EP-A- 0 408 048
- EP-A- 0 708 127
- EP-A2- 0 213 697
- EP-A2- 0 408 048
- EP-A2- 0 708 127
- WO-A1-97/48748
- DD-A1- 111 214
- JP-A- H0 641 268
- JP-A- H0 710 955
- JP-A- H05 247 173
- JP-A- H06 239 956
- JP-A- H08 104 725
- JP-A- H08 193 118
- US-A- 4 469 822

## Beschreibung

Die Herstellung von Polyurethan Hartschaumstoffen durch Umsetzung von Polyisocyanaten mit H-funktionellen Verbindungen, insbesondere Polyolen, sowie die Verwendung dieser Schaumstoffe als Wärmeisolationsmaterial ist seit langen bekannt und vielfach in der Literatur beschrieben. Ein wichtiges Anwendungsgebiet ist die Wärmeisolation bei erhöhten Temperaturen, beispielsweise in sogenannten Kunststoffmantelrohren. Diese bestehen aus einem das Heizmedium transportierenden Innenrohr, meist aus Stahl, das mit Polyurethan-Hartschaum zur Wärmeisolation umgeben ist. Der Hartschaumstoff ist außen mit einer Feuchtigkeitssperre, meist einer Polyethylenschicht, abgedichtet, wobei aus konstruktiven Gründen zwischen dem Innenrohr und dem Polyethylenaußenrohr ein mechanischer Verbund durch den Polyurethan-Hartschaumstoff vorliegen muß. Die Kunststoffmantelrohre sollen eine Gebrauchsdauer von 30-50 Jahren aufweisen.

Die Herstellung von Polyurethan-Hartschaumstoffen wird beispielsweise im Kunststoff-Handbuch Band 7, Polyurethane, Carl-Hanser-Verlag, München, 1. Auflage 1969, 2. Auflage 1983 und 3. Auflage 1993, beschrieben. Die Wärmedämmung mit Kunststoff-Mantelrohren wird in der 3. Auflage des Kunststoffhandbuchs, Band 7, beschrieben.

Die Herstellung der Kunststoffmantelrohre ist diskontinuierlich, aber auch kontinuierlich mit einer dem Doppeltransportbandverfahren zur Herstellung von Polyurethan-Hartschaum-Verbundelementen analogen Technologie möglich.

Das Heizmedium, meist unter Druck stehendes Wasser, wird nach dem gegenwärtigen Stand der Technik auf Temperaturen bis 140°C erhitzt. Der Trend geht wegen der dabei aus thermodynamischen Gründen erfolgenden Energieeinsparung zu noch höheren Temperaturen, z.B. 150°C bis kurzzeitig 160°C. Daher ist es wünschenswert, die Wärmeleitfähigkeit des Polyurethan-Hartschaumstoffs vor allem im Bereich höherer Temperaturen zu erniedrigen.

Nachdem aus ökologischen Gründen die als Treibmittel für Polyurethan-Hartschaum eingesetzten Fluorchlorkohlenwasserstoffe (FCKW), beispielsweise Trichlorfluormethan (R11) nicht mehr verwendet werden dürfen, mußte nach alternativen Treibmitteln gesucht werden.

Eine häufig verwendete Möglichkeit ist der Einsatz von Kohlendioxid. Dieses wird zumeist durch die Reaktion von Wasser mit den Isocyanatgruppen erzeugt. Bei dieser Variante wird zwar das Ozonschädigungspotential (ODP) auf Null reduziert und das Globale Treibhauspotential (GWP) gegenüber R11 erheblich reduziert, gleichzeitig wird jedoch die Wärmedämmwirkung des Polyurethan-Hartschaums stark gemindert, d.h. die Wärmeleitfähigkeit erhöht. Durch Kombination von Wasser mit Kohlenwasserstoffen als Treibmittel sind ODP und GWP etwa in gleicher Weise erniedrigt wie bei reinem Kohlendioxid, die Wärmeleitfähigkeit des Schaums ist jedoch niedriger als bei Einsatz von reinem Kohlendioxid. Die hervorragenden Werte von R11 konnten auch damit nicht erreicht werden.

Besonders als Treibmittel geeignete Kohlenwasserstoffe sind die Pentane, die eine verhältnismäßig geringe Gaswärmeleitfähigkeit und einen noch ausreichend niedrigen Siedepunkt besitzen. In den. Veröffentlichungen von Heilig, G, Kunststoffe 81(1991), S. 622-625 und Heilig, B et al., Kunststoffe 81(1991), S. 790-794 wird auf das Blähen von Polyurethan-Hartschaumstoffen mit Pentan ausführlich eingegangen.

Gemäß EP-A-421 269 ist Cyclopentan als Treibmittel wegen seiner niedrigen Eigenwärmeleitfähigkeit favorisiert, führt aber zu Schaumstoffen mit einer höheren Wärmeleitfähigkeit als R11.

Ein weiterer Nachteil der mit Kohlendioxid bzw. Kohlendioxid und Kohlenwasserstoffen geschäumten Polyurethan-Hartschaumstoffe ist ihre geringe Wärmeformbeständigkeit. Bei der praktischen Anwendung werden die mit Polyurethan-Hartschaumstoff und einer Polyethylenhaut ummantelten Rohre in das Erdreich eingegraben und müssen dem Erddruck auch unter den Bedingungen thermischer Ausdehnung an Rohrbiegungen bei erhöhter Temperatur dauerhaft standhalten, ohne daß der mechanische Verbund zwischen Innenrohr und Außenrohr beeinträchtigt wird. Eine zu starke bleibende Verformung des Hartschaumstoffes bei erhöhter Temperatur beeinträchtigt die Haltbarkeit des Verbundes, vor allem bei im Laufe eines Jahreszyklus zwangsläufig wechselnden Temperaturbedingungen. Diese Verformung ist nicht einfach durch Einstellung eines höheren Druck-E-Moduls zu verringern, da die damit verbundene Sprödigkeit durch zu hohe Spannungs- und Rißbildung infolge der nicht zu vermeidenden thermischen Ausdehnungsprozesse ebenfalls zur Beeinträchtigung des Verbundes führt.

Neben den bereits beschriebenen Anforderungen an die für Herstellung von Kunststoffmantelrohren verwendeten Polyurethan-Hartschaumstoffe spielt auch der Widerstand gegen chemischen Abbau eine wesentliche Rolle. Dieser Abbau wird nach der Europäischen Norm EN 253, Ausgabe 1994, durch eine künstlich beschleunigte Alterung bei Temperaturen oberhalb der Einsatztemperaturen, z.B. bei 170°C, charakterisiert. Im Labor wird diese Alterung zumeist mit dem sogenannten Flaschentest, bei dem der Schaumstoff in Aluminium-Druckflaschen mehrere Wochen bei 180°C gelagert und anschließend visuell begutachtet und gegebenenfalls geprüft wird, durchgeführt.

Zur Herstellung der Polyurethan-Hartschaumstoffe werden zumeist Polyole verwendet, die durch Anlagerung von Alkylenoxiden, meist Propylenoxid oder Ethylenoxid/Propylenoxid-Gemischen, an H-funktionelle Startsubstanzen hergestellt werden. Als Startsubstanzen werden beispielsweise mehrfunktionelle, hydroxylgruppenhaltige Verbindungen, wie Glycerin, Pentaerythrit, Trimethylolpropan, Sucrose oder Sorbit verwendet. Auch Mischungen derartiger Polyole sind bekannt, beispielsweise aus US-A-4,469,822 oder DE-A-39 93 335. Der Einsatz von Gemischen aus Sorbit-und Sucrosepolyolen für Polyurethan-Hartschaumstoff zur Rohrisolierung wird in EP-A-668 306 bzw. DE-A-44 05 061 erwähnt. Die so hergestellten Polyurethan-Hartschaumstoffe haben jedoch mit Kohlendioxid oder Kohlendioxid/Cyclopentangemischen als Treibmittel unbefriedigend hohe Wärmeleitfähigkeiten. Außerdem sind die Wärmeformbeständigkeiten, gemessen bei 150°C oder 160°C, unbefriedigend.

Weiterhin ist der Einsatz von Polyetheralkoholen, die mit aromatischen Aminen, insbesondere Toluylendiamin (TDA) gestartet sind, zur Herstellung von Polyurethan-Hartschäumen bekannt, beispielsweise aus US-A-4,469,822, EP-A-581 191, EP-A-421 269 oder EP-A-408 048.

In der EP-A-408 048 werden Polyurethan-Hartschaumstoffe beschrieben, deren Polyolkomponente ein Polyolgemisch ist. Dieses Polyolgemisch besteht aus einem Polyetheralkohol, dessen Startsubstanz ein acyclischer Zuckeralkohol mit 5 bis 6 Kohlenstoffatomen, insbesondere Sorbitol, ist, und mindestens einem amingestartetem Polyetheralkohol. Die Polyolkomponente hat eine Durchschnitts-Hydroxylzahl von 300 bis 430 mg KOH/g, der Zuckergehalt liegt zwischen 3 und 14 Gew.-%, der TDA-Gehalt unter 8 Gew.-%. Als Treibmittel wird Wasser in einer Menge von 4 bis 7 Gew.-%, bezogen auf die genannte Polyolkomponente, vorzugsweise im Gemisch mit halogenierten und/oder teilhalogenierten Kohlenwasserstoffen, wie R11, HFCKW 123 und HFCKW 141 b, verwendet. Der hohe Wassergehalt der Polyolkomponente führt jedoch zu Schaumstoffen; die für den Einsatz in der Rohrisolation zu spröde sind und bei längerem Gebrauch Rißbildungen aufweisen, wodurch der mechanische Verbund zwischen Medienrohr und Wand nicht mehr gewährleistet ist. Die in EP-A-408 048 beschriebenen Co-Treibmittel sind, sofern nicht bereits verboten, ebenfalls als ökologisch bedenklich zu betrachten. Die Verwendung von Kohlendioxid allein oder gemeinsam mit geringen Mengen an Co-Treibmitteln führt jedoch, abgesehen von der bereits erwähnten Sprödigkeit, zu Schaumstoffen mit einer unerwünscht hohen Wärmeleitfähigkeit und einer unzureichenden Wärmeformbeständigkeit bei erhöhten Temperaturen.

Aufgabe der Erfindung war es, Polyurethan-Hartschaumstoffe für den Einsatz in Kunststoff-Mantelrohren bereitzustellen, die eine geringe Wärmeleitfähigkeit und eine hohe Wärmeformbeständigkeit bei hohen Temperaturen aufweisen, völlig ohne den Einsatz von halogenierten Kohlenwasserstoffen hergestellt werden können und einen geringen chemischen Abbau aufweisen.

Die Aufgabe konnte überraschenderweise gelöst werden durch den Einsatz eines Polyolgemisches aus einem Polyol, hergestellt aus Ethylenoxid und/oder Propylenoxid mit einem Hexit oder einem Hexitgemisch als Startsubstanz, wobei der Gesamthexitgehalt im Polyolgemisch zwischen 15 und 30 Gew.-% beträgt, und einem Polyol, hergestellt aus Ethylenoxid und/oder Propylenoxid und mindestens einem aromatischen Amin als Startsubstanz, wobei der Gesamt-Amingehalt im Polyolgemisch zwischen 1 und 10 Gew.-% beträgt.

Gegenstand der Erfindung ist demzufolge ein Verfahren zur Herstellung von Polyurethan-Hartschaumstoffen mit verbesserter Wärmeformbeständigkeit und erniedrigter Wärmeleitfähigkeit durch Umsetzung von
a) Polyisocyanaten mit
b) gegenüber Isocyanaten reaktive Wasserstoffatome aufweisenden Verbindungen in Gegenwart von
c) Wasser,
d) Cyclopentan als physikalisch wirkendes Treibmittel und gegebenenfalls
e) Katalysatoren sowie bekannten Hilfs- und/oder Zusatzstoffen,
dadurch gekennzeichnet, daß als gegenüber Isocyanaten reaktive Wasserstoffatome aufweisende Verbindungen b) eine Polyolmischung, bestehend aus
b1) einem Polyol, herstellbar durch Anlagerung von Ethylenoxid und/oder Propylenoxid an ein Hexit oder ein Hexitgemisch, wobei der Gesamt-Hexitgehalt in der Polyolmischung zwischen 15 und 30, vorzugsweise 16-22, insbesondere 17-20 Gew.-%, beträgt,
   und
b2) einem Polyol, herstellbar durch Anlagerung von Ethylenoxid und/oder Propylenoxid an ein oder mehrere aromatische Amine, wobei der Gesamt-Amingehalt in der Polyolmischung zwischen 1 und 10 Gew.-%, beträgt,
   eingesetzt wird und der Gehalt der Polyolmischung an der Komponente b) 60 bis 100 Masseteile je 100 Masseteile der Komponente b) beträgt, wobei als aromatisches Amin vicinales TDA eingesetzt wird.

Gegenstand der Erfindung sind weiterhin die nach diesem Verfahren hergestellten Polyurethan-Hartschaumstoffe.

Die zur Herstellung des Polyols b1) verwendeten Hexite werden beispielsweise in Römpps Chemie Lexikon, 9. Auflage, Georg Thieme Verlag Stuttgart-New York (1990), beschrieben. Diese Hexite können einzeln oder als beliebige Gemische miteinander als Startsubstanzen eingesetzt und mit den Alkylenoxiden umgesetzt werden. Vorzugsweise eingesetzt werden Sorbit, Mannit oder Dulcit allein oder als Gemisch miteinander. Besonders bevorzugt wird Sorbit.

Die Hexite können auch gemeinsam mit anderen H-funktionellen Costartern umgesetzt werden. Als Costarter werden insbesondere flüssige H-funktionelle Verbindungen, vorzugsweise zwei- und/oder dreifunktionelle Alkohole, wie Ethylenglykol, Propylenglykol, Glycerin verwendet. Häufig wird auch Wasser als Costarter eingesetzt, das mit den Alkylenoxiden zu Glykolen reagiert.

Als Alkylenoxide werden die niederen Alkylenoxide Ethylenoxid und Propylenoxid verwendet. Die Alkylenoxide können einzeln oder im Gemisch miteinander eingesetzt werden. Bei Verwendung von mehreren Alkylenoxiden können diese sowohl nacheinander als sogenannte Blöcke oder im Gemisch miteinander als sogenanntes statistisches Gemisch an die Startsubstanz angelagert werden. Die Anlagerung der Alkylenoxide an die Startsubstanz erfolgt zumeist unter Verwendung basischer, insbesondere alkalischer Katalysatoren. Das Herstellungsverfahren der Polyetheralkohole wird beispielsweise beschrieben aus Kunststoffhandbuch, Band 7,."Polyurethane" herausgegeben von Günther Oertel, 3.Auflage 1993, Carl-Hanser-Verlag München.

Die zur Herstellung des Polyols b2) verwendeten aromatischen Amine sind vicinale Toluylendiamin-Isomere (TDA).

Bei Verwendung von vicinalem TDA können sowohl reine vicinale TDA-Isomere als auch Gemische aus unterschiedlichen vicinalen TDA-Isomeren verwendet werden.

Bei der Verwendung von MDA kann sowohl das reine Zweikernprodukt als auch Gemische aus diesem mit Polyphenylenpolymethylenpolyaminen eingesetzt werden. Möglich ist auch die Verwendung von Gemischen aus TDA und MDA.

Die aromatischen Amine können gemeinsam mit den zur Herstellung des Polyols b1) beschriebenen Costartern eingesetzt werden.

Auf Grund der Basizität der aromatische Amine kann auf die Mitverwendung zusätzlicher basischer Katalysatoren verzichtet werden. Zur Verbesserung der Raum-Zeit-Ausbeute ist es jedoch üblich, basische Katalysatoren, insbesondere Alkalihydroxide, einzusetzen. Zu den eingesetzten Alkylenoxiden und dem Herstellungsverfahren gilt das zur Herstellung der Polyole b1 gesagte analog.

Die Hydroxylzahlen der Polyole b1) und b2) liegen im Bereich von 150 bis 800 mgKOH/g, vorzugsweise 250-700 mgKOH/g, insbesondere 350 bis 600 mgKOH/g. Der Hexitgehalt in Polyol b1) ist größer 17 Gew.-%, bezogen auf b1), der Amingehalt in Polyol b2) ist größer 15 Gew.-%, bezogen auf b2). Die Polyolmischung aus b1) und b2) wird in einer Menge von 60 bis 100 Gewichtsteilen pro 100 Gewichtsteile der Komponente b) eingesetzt.

Das Mengenverhältnis der Polyole b1) und b2) untereinander ist so zu wählen, daß der Gesamt-Hexit-Gehalt in der Polyolmischung zwischen 15 und 30 Gew.-% und der Gesamt-Amin-Gehalt in der Polyolmischung zwischen 1 und 10 Gew.-%, jeweils bezogen auf das Gewicht der Polyolmischung, betragen.

Bei zu hohen Hexitgehalten steigt die Viskosität der Polyole so stark an, daß die Verarbeitung zu schwierig wird. Bei zu geringen Gehalten an Hexiten und Aminen sowie Amingehalten oberhalb 10 Gew.-% ist die Wärmeformbeständigkeit der Schaumstoffe zu gering.

Die Polyolmischung kann zusammen mit bis zu 40 Gew.-Teilen, bezogen auf 100 Gew.-Teile der Komponente b), anderer H-funktioneller Verbindungen, auf die weiter unten genauer eingegangen wird, verwendet werden.

Zu den einzelnen Einsatzstoffen des erfindungsgemäßen Verfahrens ist folgendes zu sagen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und - 1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet.
   Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenyl-methan-diisocyanat, Roh-MDI, 2,4- und/oder 2,6-Toluylen-diisocyanat gegebenenfalls gemischt werden.
   Besonders bewährt haben sich Diphenylmethan-diisocyanat-Isomerengemische oder Roh-MDI mit einem Diphenylmethandiisocyanatisomerengehalt von 33 bis 55 Masse-% und urethangruppenhaltige Polyisocyanatgemische auf Basis von Diphenylmethandiisocyanat mit einem NCO-Gehalt von 15 bis 33 Masse-%.
b) Als Verbindungen mit mindestens zwei gegenüber Isocyanaten reaktiven Wasserstoffatomen, die gemeinsam mit der beschriebenen Polyolmischung eingesetzt werden können, kommen Verbindungen in Frage, die zwei oder mehrere reaktive Gruppen, ausgewählt aus OH-Gruppen, SH-Gruppen, NH-Gruppen NH₂-Gruppen und CH-aciden Gruppen, wie z.B. β-Diketo-Gruppen, im Molekül tragen.
   Zweckmäßigerweise werden solche mit einer Funktionalität von 2 bis 8, vorzugsweise 2 bis 6, und einem Molekulargewicht von 300 bis 8000, vorzugsweise von 400 bis 4000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 100 bis 850 und vorzugsweise 200 bis 600.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3, und ein Molekulargewicht von 300 bis 3000, vorzugsweise 350 bis 2000 und insbesondere 400 bis 600.
   Insbesondere als Polyole verwendet werden jedoch Polyether-polyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin.
   Als Startermoleküle kommen ferner in Betracht: Alkanolamine, wie z.B. Ethanolamin, N-Methyl- und N-Ethyl-ethanolamin, Dialkanolamine; wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, und Saccharose.
   Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 300 bis 8000, vorzugsweise 400 bis 1500 und insbesondere 420 bis 1100 und geeignete Polyoxytetramethylen-glykole ein Molekulargewicht bis ungefähr 3500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
   Die Hartschaumstoffe auf Isocyanatbasis können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyolverbindung (b) zum Einsatz.
c) Als Treibmittel wird Wasser eingesetzt, welches durch die Reaktion mit den Isocyanatgruppe Kohlendioxid abspaltet. Der Wassergehalt beträgt insbesondere 0,1 bis 4, vorzugsweise 0,3 bis 3, insbesondere 0,5 bis 2 Gew.-%, bezogen auf die Gesamtmasse aller Wasserstoffaktiven Verbindungen. Ein zu hoher Wassergehalt kann zu einer erhöhten Sprödigkeit und Wärmeleitfähigkeit des Schaumes führen.
d) Zusätzlich zu Wasser wird Cyclopentan als physikalisch wirkendes Treibmittel d) eingesetzt. Die Menge an Cyclopentan liegt bei 1 bis 30 Gew.-Teilen, vorzugsweise 16-22 Gew.-Teile, insbesondere 6-12 Gew.-Teile, bezogen auf das Gewicht aller wasserstoffaktiven Verbindungen.
e) Als Katalysatoren (e) zur Herstellung der erfindungsgemäßen Hartschaumstoffe werden insbesondere Verbindungen verwendet, die die Reaktion der reaktive Wasserstoffatome, insbesondere Hydroxylgruppen, enthaltenden Verbindungen der Komponente (b) mit den organischen, gegebenenfalls modifizierten Polyisocyanaten (a) stark beschleunigen. Die Isocyanatgruppen können durch geeignete Katalysatoren (e) aber auch miteinander zur Reaktion gebracht werden, wobei neben den Addukten zwischen Isocyanaten (a) und den Verbindungen mit wasserstoffaktiven Gruppen (b) vorzugsweise Isocyanuratstrukturen entstehen.
   Als Katalysatoren werden also insbesondere solche Stoffe verwendet, die Reaktionen der Isocyanate beschleunigen, insbesondere die Urethan-, Harnstoff- und Isocyanuratbildung.
   Bevorzugt hierfür sind tertiäre Amine, Zinn- und Bismutumverbindungen, Alkali- und Erdalkalicarboxylate, quarternäre Ammoniumsalze, s-Hexahydrotriazine und Tris-(dialkylaminomethyl)-phenole.
   In Betracht kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und vorzugsweise 1,4-Diaza-bi-cyclo-(2,2,2)-octan, und Alkanolaminverbindungen, wie Triethanolamin,Triisopropanolamin, N-Methyl- und N-Ethyl-diethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
   Der Reaktionsmischung zur Herstellung der Hartschaumstoffe auf Isocyanatbasis können gegebenenfalls auch noch Hilfsmittel und/oder Zusatzstoffe einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Flammschutzmittel können alle in der Polyurethanchemie für diesen Anwendungszweck üblichen Stoffe eingesetzt werden. Vorwiegend verwendet man Halogen- und Phosphorverbindungen, beispielsweise Ester der Orthophosphorsäure und der Methanphosphonsäure, z.B. Tris-(2-chlor-propyl)-phosphat oder Bis-(2-hydroxyethyl)aminomethylphosphonsäure-diethylester. Da der Hartschaumstoff auf Isocyanatbasis in der Zukunft nur mit halogenfreien Zusatzstoffen gefertigt werden sollte, müssen auch die Flammschutzmittel halogenfrei sein. Hier kommen beispielsweise gegenüber Isocyanat reaktive Derivate der Phosphorsäure, der phosphorigen Säure oder der Phosphonsäure in Frage, gegebenenfalls in Kombination mit nicht reaktiven flüssigen und/oder festen halogenfreien Flammschutzmitteln, z.B. aus organischen Derivaten der Phosphorsäure, Phosphonsäure oder phosphorigen Säure bzw. Salzen der Phosphorsäure und anderen den Flammschutz unterstützenden Stoffen, wie Stärke, Cellulose, Aluminiumhydrat u.a. Im allgemeinen hat es sich als zweckmäßig erwiesen, 5 bis 40 Gew.-Teile, vorzugsweise 5 bis 25 Gew.-Teile, der genannten Flammschutzmittel für jeweils 100 Gew.-Teile der Komponente (b) zu verwenden.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Stärke, Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Nähere Angaben über oben genannte und weitere Ausgangsstoffe sind der Fachliteratur, beispielsweise der Monographie von H. J. Saunders und K. C. Frisch "High Polymers" Band XVI, Polyurethanes Teil 1 und 2 , Verlag Interscience Publishers 1962 bzw. 1964 oder dem bereits erwähnten Kunststoffhandbuch, Polyurethane, Band VII, Carl Hanser Verlag, München, Wien, 1., 2. und 3. Auflage , 1966, 1983 und 1993 zu entnehmen.

Zur Herstellung des erfindungsgemäßen Polyurethan-Hartschaumstoffes werden die Polyisocyanate (a) mit den gegenüber Isocyanaten reaktive Wasserstoffatome aufweisenden Verbindungen zur Reaktion gebracht. Dabei werden üblicherweise die Komponenten (b) bis (e) zu der sogenannten Polyolkomponente vereinigt. Die Vereinigung des Polyisocyanats mit der Polyolkomponente kann durch Rühren erfolgen. Es ist jedoch üblich, die Verschäumung maschinell durchzuführen, wobei die Komponenten in Mischköpfen vereinigt und danach in die Form eingebracht werden. Der NCO-Index beträgt dabei 110 bis 160. Die erfindungsgemäß hergestellten Polyurethan-Hartschaumstoffe haben Dichten im Bereich von 50 bis 120 Kg/m³.

Zur industriellen Fertigung von gedämmten Rohren kann die Reaktionsmischung diskontinuierlich in den Hohlraum zwischen Metallrohr und Kunststoffdeckschicht von vormontierten Rohren oder kontinuierlich auf Metallrohre, um die anschließend die Deckschicht gelegt wird, gebracht werden.

Die erfindungsgemäß hergestellten Polyurethan-Hartschaumstoffe zeichnen sich gegenüber solchen, die nicht nach dem erfindungsgemäßen Verfahren hergestellt werden, durch eine deutlich geringere Wärmeleitfähigkeit, eine verbesserte Wärmeformbeständigkeit und eine geringere Sprödigkeit aus.

Die Erfindung soll an nachstehenden Beispielen näher erläutert werden.

### Beispiele 1 bis 14

### Verwendete Polyole

### Polyol 1

Hergestellt aus 25,2 Teilen Sorbit und 74,8 Teilen Propylenoxid mit Kaliumhydroxid als Katalysator und 0,5 Teilen Wasser als Costarter. Die Hydroxyzahl (OHZ) betrug 495 mg KOH/g, die Viskosität bei 25°C 17900 mPas.

### Polyol 2

Hergestellt aus 22,7 % eines Gemisches aus 2,3- und 3,4-Toluylendiamin, 22,7 % Ethylenoxid und 54,6 % Propylenoxid mit Kaliumhydroxid als Katalysator. Die OHZ betrug 406 mg KOH/g, die Viskosität bei 25°C 20900 mPas.

### Polyol 3

Hergestellt aus 28,0 % eines Gemisches aus 2,3- und 3,4-Toluylendiamin, 22,0 % Ethylenoxid und 50 % Propylenoxid mit Kaliumhydroxid als Katalysator. Die OHZ betrug 395 mg KOH/g, die Viskosität bei 25°C 8176 mPas.

### Polyol 4

Hergestellt aus 1,2-Propandiol als Starter und Propylenoxid mit Kaliumhydroxid als Katalysator. Die OHZ betrug 105 mg KOH/g, die Viskosität bei 25°C 155 mPas.

### Polyol 5

Hergestellt aus 1,2 Propandiol als Starter und Propylenoxid mit Kaliumhydroxid als Katalysator. Die OHZ betrug 250 mg KOH/g, die Viskosität bei 25°C 70 mPas.

### Polyol 6

Hergestellt aus 24,8 % eines Gemisches aus 40 Teilen 4,4'-Diphenylmethandiamin, 4,5 Teilen 2,4' Diphenylmethandiamin und 55,5 Teilen Polyphenylpolymethylenpolyamin, 5,7 % Monoethylenglykol, 14,2 % Ethylenoxid und 55,3 % 1,2-Propylenoxid mit Kaliumhydroxid als Katalysator. Die OHZ betrug 377 mg KOH/g, die Viskosität bei 25°C 14094 mPas.

### Polyol 7

Hergestellt aus 18,3 % eines Gemisches aus 40 Teilen 4,4'-Diphenylmethandiamin, 4,5 Teilen 2,4' Diphenylmethandiamin und 55,5 Teilen Polyphenylpolymethylenpolyamin, 9,4 % Glycerin, 10,5 % Ethylenoxid und 61,8 % 1,2-Propylenoxid mit Kaliumhydroxid als Katalysator. Die OHZ betrug 386 mg KOH/g, die Viskosität bei 25°C 9430 mPas.

### Herstellung der Polyurethan-Hartschaumstoffe

Die in der Tabelle angegebenen Polyole wurden mit den Treibmitteln, Stabilisatoren, Katalysatoren und Hilfsstoffen zur A-Komponente vereinigt. 100 Gewichtsteile der A-Komponente wurden entsprechend dem in der Tabelle angegebenen NCO-Index mit einer Mischung aus Diphenylmethan-Diisocyanat und Polyphenylen-Polymethylen-Polyisocyanaten mit einem NCO-Gehalt von 31,5 Masse-% (M20A der BASF Schwarzheide GmbH) unter intensivem Rühren oder mittels einer Hochdruck-Schäummaschine vermischt. 576 g des Gemisches'aus A-Komponente und Isocyanat wurden unmittelbar nach dem Vermischen in ein auf 45°C temperiertes Formwerkzeug der Abmessungen 300 mm x 400 mm x 80 mm gegossen, das anschließend fest verschlossen wurde. Die Gesamtdichte der Formkörper betrug 60 kg/m3. Nach einer Entformzeit von 30 min wurden die Formkörper entnommen. Nach einer Lagerzeit von 24 Stunden wurden Prüfkörper aus dem Inneren des Schaumstoffblocks herausgesägt und daran die Wärmeleitfähigkeit und die Wärmeformbeständigkeit bestimmt. Die Wärmeleitfähigkeit bei Raumtemperatur wurde mit dem Gerät ANACON, Model 88 der Firma Anacon, St. Peters Road Maidenhead, Berkshire, England SL6 7QA bei 23,9°C Mitteltemperatur (Gradient 37,7°C/10°C) und die Wärmeleitfähigkeit bei erhöhter Temperatur mit dem Gerät Rapid-K VT 400 der Firma Holometrix Inc.,Boston, USA, gemessen. Der Temperatur-Gradient ist in der Tabelle angegeben.

Die Wärmebeständigkeit wurde nach DIN 18164 an Körpern der Abmessung 50 mm x 50 mm x 50 mm nach einer Belastung von 0,04 N/mm² über 24 Stunden als Prozent Verformung gemessen. Die Prüftemperaturen sind in der Tabelle angegeben.

Für den Flaschentest wurden 2,5-1-Aluminiumdruckflaschen mit 187,5 g des aufschäumenden Gemisches gefüllt. Das entspricht einer Schaumdichte von 75 kg/m³. Danach wurden die Flaschen fest verschlossen und bei 180°C über einem Zeitraum von 6 Wochen gelagert. Der Schaumstoff wurde danach visuell begutachtet und gegebenenfalls die Festigkeit im Druckversuch nach DIN 53421 geprüft.

Die genaueren Rezepturen sowie die Parameter der Schaumstoffe und die Ergebnisse der Prüfungen sind in der Tabelle festgehalten. Die angegebenen Werte bei den Komponenten sind Gewichtsteile.

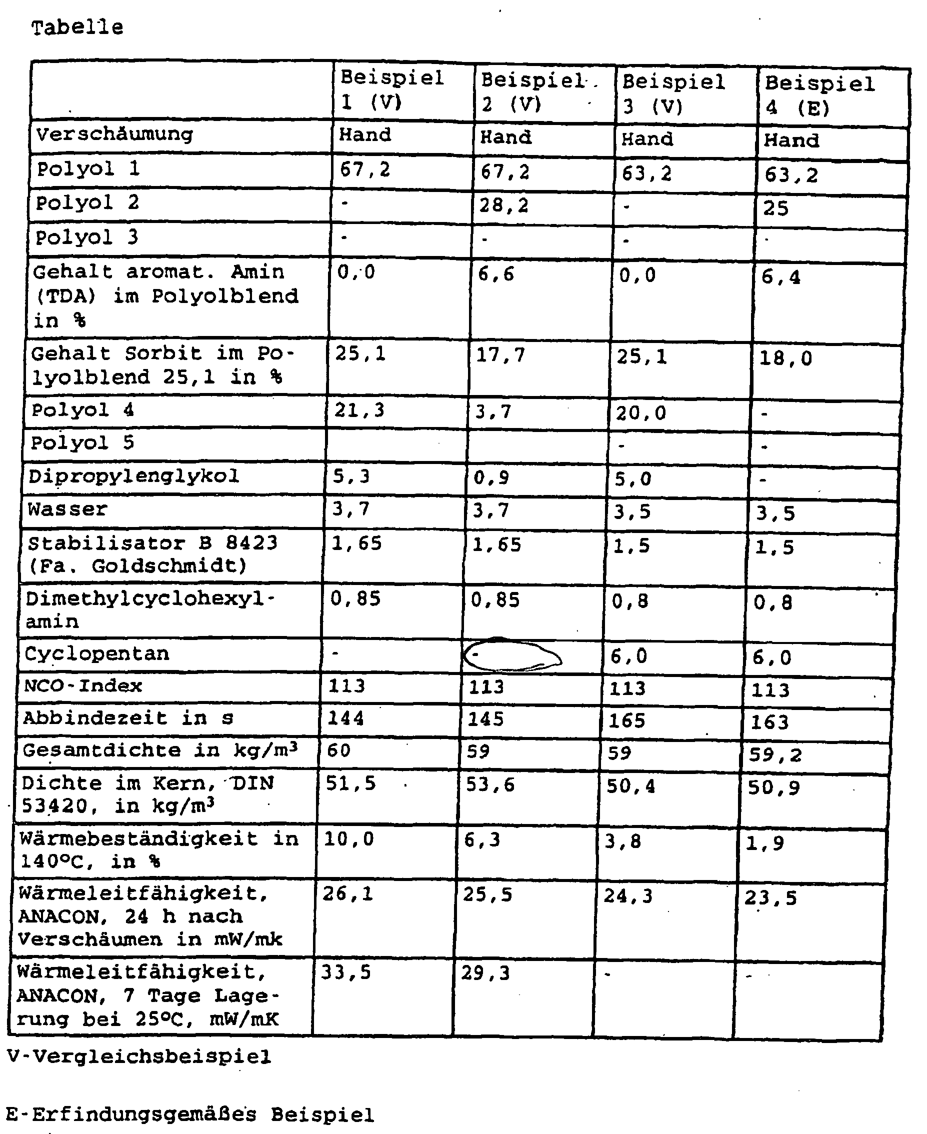

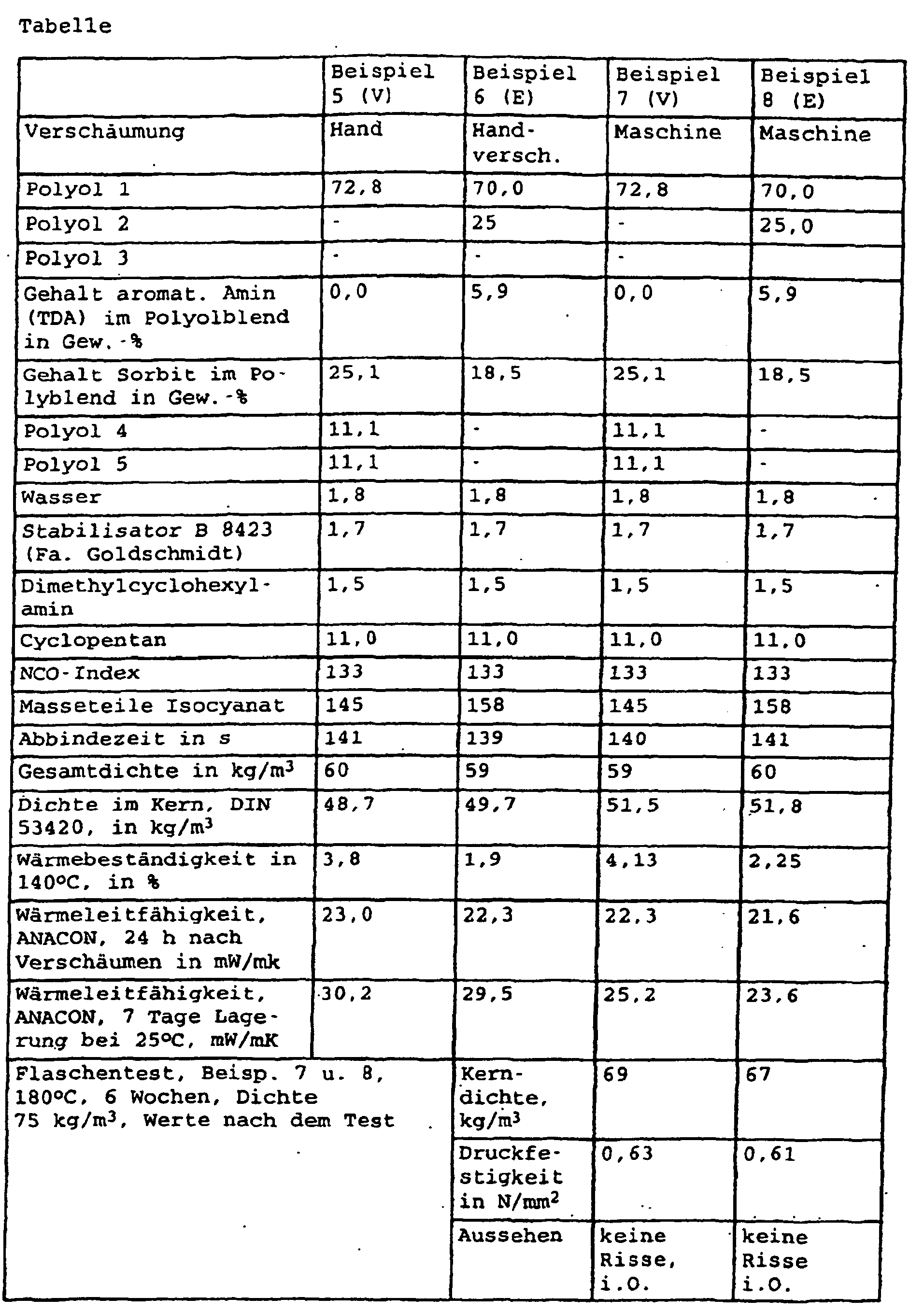

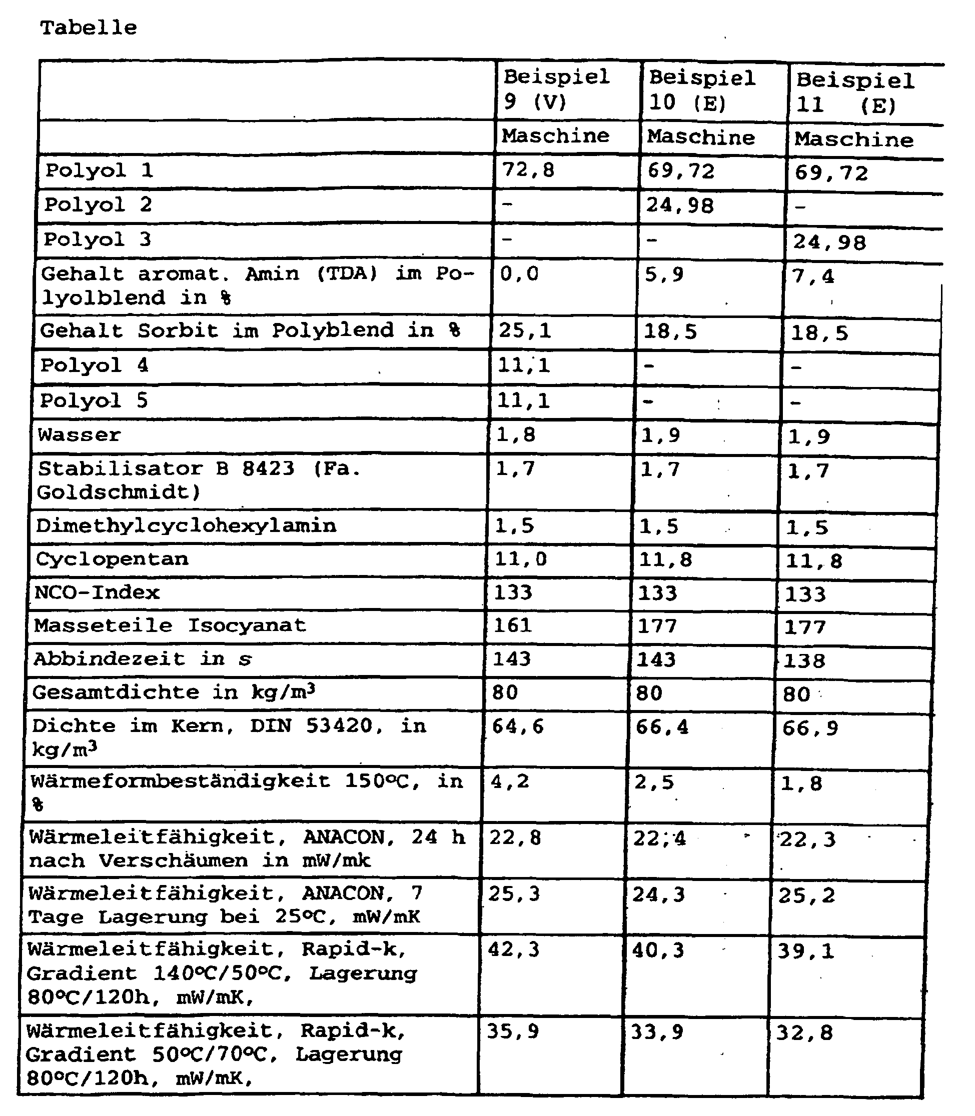

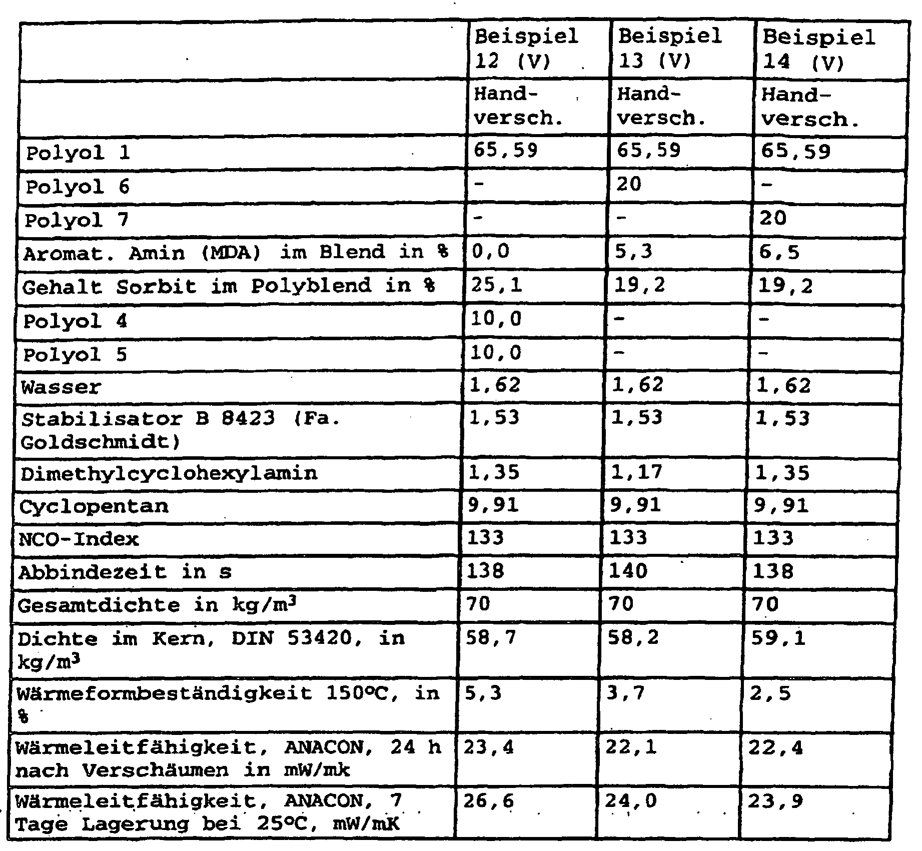

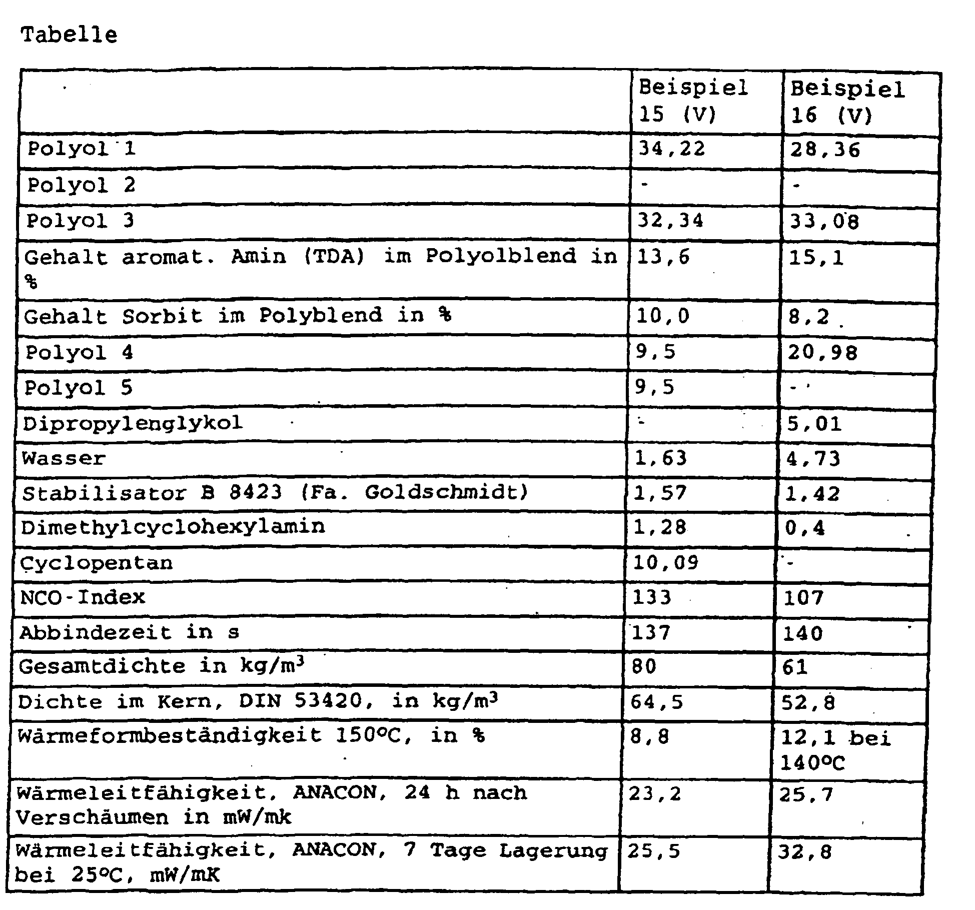

## Patentansprüche

1. Verfahren zur Herstellung von Polyurethan-Hartschaumstoffen mit verbesserter Wärmeformbeständigkeit und erniedrigter Wärmeleitfähigkeit durch Umsetzung von
a) Polyisocyanaten mit
b) gegenüber Isocyanaten reaktive Wasserstoffatome aufweisenden Verbindungen in Gegenwart von
c) Wasser,
d) Cyclopentan als physikalisch wirkendes Treibmittel und gegebenenfalls
e) Katalysatoren sowie bekannten Hilft- und/oder Zusatzstoffen,
**dadurch gekennzeichnet, daß** als gegenüber Isocyanaten reaktive Wasserstoffatome aufweisende Verbindungen b) eine Polyolmischung, bestehend aus
b1) einem Polyol, herstellbar durch Anlagerung von Ethylenoxid und/oder Propylenoxid an ein Hexit oder ein Hexitgemisch, wobei der Gesamt-Hexitgehalt in der Polyolmischung zwischen 15 und 30 Gew.-%, bezogen auf die Polyolmischung, beträgt, und
b2) einem Polyol, herstellbar durch Anlagerung von Ethylenoxid und/oder Propylenoxid an ein oder mehrere aromatische Amine, wobei der Gesamt-Amingehalt in der Polyolmischung zwischen 1 und 10 Gew.-%, bezogen auf die Polyolmischung, beträgt und als aromatisches Amin vicinale Toluylendiamin-Isomere eingesetzt werden,
eingesetzt wird und der Gehalt der Polyolmischung an der Komponente b) 60 bis 100 Masseteile je 100 Masseteilen der Komponente b) beträgt.

2. Verfahren nach Anspruch 1, **dadurch gekennzeichnet, daß** der Gesamthexitgehalt in der Polyolmischung zwischen 16 und 22 Gew.-%, bezogen auf die Polyolmischung, beträgt.

3. Verfahren nach Anspruch 1, **dadurch gekennzeichnet, daß** der Gesamthexitgehalt in der Polyolmischung zwischen 17 und 20 Gew.-%, bezogen auf die Polyolmischung, beträgt.

4. Verfahren nach Anspruch 1, **dadurch gekennzeichnet, daß** der Hexitgehalt in Polyol b1 größer 17 Gew.-%, bezogen auf b1, ist.

5. Verfahren nach Anspruch 1, **dadurch gekennzeichnet, daß** der Gesamt-Amingehalt in Polyol b2 größer 15 Gew.-%, bezogen auf b2, ist.

6. Verfahren nach Anspruch 1, **dadurch gekennzeichnet, daß** als Hexite Sorbit, Mannit, Dulcit einzeln oder als Gemische untereinander eingesetzt werden.

7. Verfahren nach Anspruch 1, **dadurch gekennzeichnet, daß** als Hexit Sorbit eingesetzt wird.

8. Verfahren nach Anspruch 1, **dadurch gekennzeichnet, daß** die Polyole b1 und b2 eine Hydroxylzahl zwischen 150 und 800 mg KoH/g aufweisen.

9. Verfahren nach Anspruch 1, **dadurch gekennzeichnet, daß** das Cyclopentan d) in einer Menge von 1 bis 30 Gew.-%, bezogen auf die Summe des Gewichtes der Komponenten b) und c), eingesetzt wird.

## Claims

1. A process for producing rigid polyurethane foams having improved heat distortion resistance and reduced thermal conductivity by reacting
a) polyisocyanates with
b) compounds containing hydrogen atoms reactive toward isocyanates, in the presence of
c) water,
d) cyclopentane as physically acting blowing agent and optionally
e) catalysts and known auxiliaries and/or additives,
wherein the compounds b) containing hydrogen atoms reactive toward isocyanates are a polyol mixture comprising
b1) a polyol which can be prepared by addition of ethylene oxide and/or propylene oxide onto a hexitol or a hexitol mixture, with the total hexitol content of the polyol mixture being from 15 to 30 % by weight, based on the polyol mixture, and
b2) a polyol which can be prepared by addition of ethylene oxide and/or propylene oxide onto one or more aromatic amines, with the total amine content of the polyol mixture being from 1 to 10 % by weight, based on the polyol mixture, and the aromatic amines used being vicinal tolylenediamine isomers,
and the amount of the polyol mixture in the component b) is from 60 to 100 parts by mass per 100 parts by mass of the component b).

2. The process according to claim 1, wherein the total hexitol content of the polyol mixture is from 16 to 22 % by weight, based on the polyol mixture.

3. The process according to claim 1, wherein the total hexitol content of the polyol mixture is from 17 to 20 % by weight, based on the polyol mixture.

4. The process according to claim 1, wherein the hexitol content of the polyol b1 is greater than 17 % by weight, based on b1.

5. The process according to claim 1, wherein the total amine content of polyol b2 is greater than 15 % by weight, based on b2.

6. The process according to claim 1, wherein the hexitols used are sorbitol, mannitol and dulcitol, either individually or as mixtures with one another.

7. The process according to claim 1, wherein the hexitol used is sorbitol.

8. The process according to claim 1, wherein the polyols b1 and b2 have a hydroxyl number of from 150 to 800 mg KOH/g.

9. The process according to claim 1, wherein the cyclopentane d) is used in an amount of from 1 to 30 % by weight, based on the sum of the weights of the components b) and c).

## Revendications

1. Procédé pour la préparation de mousses dures de polyuréthane possédant une résistance améliorée à la déformation à chaud et une conductibilité thermique réduite, par mise en réaction
a) de polyisocyanates avec
b) des composés présentant des atomes d'hydrogène aptes à réagir vis-à-vis d'isocyanates, en présence
c) d'eau,
d) de cyclopentane à titre d'agent moussant physiquement actif et le cas échéant
e) de catalyseurs ainsi que d'adjuvants et/ou d'additifs connus
**caractérisé en ce qu'**on met en oeuvre, à titre de composés b) présentant des atomes d'hydrogène aptes à réagir vis-à-vis d'isocyanates, un mélange de polyols constitué par
b1) un polyol, que l'on peut préparer via une fixation par addition d'oxyde d'éthylène et/ou d'oxyde de propylène sur un hexitol ou sur un mélange d'hexitols, la teneur totale en hexitols du mélange de polyols s'élevant entre 15 et 30 % en poids, rapportés au mélange de polyols, et
b2) un polyol, que l'on peut préparer via une fixation par addition d'oxyde d'éthylène et/ou d'oxyde de propylène sur une ou plusieurs amines aromatiques, la teneur totale en amines du mélange de polyols s'élevant entre 1 et 10 % en poids, rapportés au mélange de polyols, et à titre d'amine aromatique étant mis en oeuvre des isomères vicinaux de toluylènediamine,
et la teneur du mélange de polyols en composant b) s'élève de 60 à 100 parties en masse par 100 parties en masse du composant b).

2. Procédé selon la revendication 1, **caractérisé en ce que** la teneur totale en hexitols du mélange de polyols se situe entre 16 et 22 % en poids, rapportés au mélange de polyols.

3. Procédé selon la revendication 1, **caractérisé en ce que** la teneur totale en hexitols du mélange de polyols se situe entre 17 et 20 % en poids, rapportés au mélange de polyols.

4. Procédé selon la revendication 1, **caractérisé en ce que** la teneur du polyol b1 en hexitols est supérieure à 17 % en poids, rapportés à b1.

5. Procédé selon la revendication 1, **caractérisé en ce que** la teneur totale du polyol b2 en amines est supérieure à 15 % en poids, rapportés à b2.

6. Procédé selon la revendication 1, **caractérisé en ce qu'**on met en oeuvre, à titre d'hexitols, le sorbitol, le mannitol, le dulcitol à titre individuel ou sous forme de leurs mélanges.

7. Procédé selon la revendication 1, **caractérisé en ce qu'**on met en oeuvre, à titre d'hexitol, le sorbitol.

8. Procédé selon la revendication 1, **caractérisé en ce que** les polyols b1 et b2 représentent un indice d'hydroxyle entre 150 et 800 mg de KOH/g.

9. Procédé selon la revendication 1, **caractérisé en ce qu'**on met en oeuvre le cyclopentane d) en une quantité de 1 à 30 % en poids, rapportés à la somme des poids des composants b) et c).
